# EUROPEAN PATENT APPLICATION

(11) **EP 2 325 679 A1**
(43) Date of publication of application: **25.05.2011**
(21) Application number: 10161217.4
(22) Date of filing: 27.04.2010
(51) Int. Cl.: G02B 6/00, F21V 8/00

(54) **Backlight unit and display apparatus having the same**

(30) Priority: 17.11.2009 KR 20090110906
(71) Applicant: Samsung Electronics Co., Ltd., Gyeonggi-do 442-742 (KR)
(72) Inventor: Cho, Hyun-seung, Anyang-si (KR)
(74) Representative: Waddington, Richard

(57) **Abstract**

Disclosed are a backlight unit and a display apparatus. The display apparatus including: an image receiver receiving an image signal; an image processor processing an image signal received by the image receiver; a display panel displaying an image signal processed by the image processor into an image; a plurality of light guide plates providing light to divided display regions of the display panel, respectively; and a plurality of light sources sequentially disposed along a lateral surface of each of the light guide plates and providing light to the lateral surface of each of the light guide plates, a row of at least part of the plurality of light sources corresponding to the lateral surface of one of the light guide plates being different from a row of at least part of a remaining portion of the plurality of light sources.

## Description

### BACKGROUND

### 1. Field

Apparatuses consistent with the exemplary embodiments relate to a backlight unit which provides light for image display via a light source and a light guide plate, and a display apparatus having the same, and more particularly to a backlight unit which controls significant variations in brightness over a display region, and a display apparatus having the same.

### 2. Description of the Related Art

A display apparatus, such as a TV and a monitor, has a display panel to display images, thereby presenting broadcasting signals or image data in various formats. A display panel is realized by various forms, e.g., a liquid crystal panel and a plasma panel, to be applicable to different kinds of display apparatuses. In the case of a liquid crystal panel, which does not generate light by itself, a display apparatus has a backlight unit to provide light to the panel.

A backlight unit in a display apparatus is a light source which generates light, and increasingly uses light emitting diodes, which are excellent in view of environmental issues, response speed, etc., as compared with a cold cathode fluorescent lamp (CCFL), which has been conventionally used. A backlight unit is classified into a direct type and an edge type depending on the position of a light source.

In a direct-type backlight unit, light sources are disposed parallel with the rear side of a light guide plate, so that each light source emits light directly to a panel in front. In an edge-type backlight unit, light sources are disposed in a bar along the edge of a light guide plate, and light from the light sources enters a lateral side of the light guide plate to be projected to a panel. An edge-type backlight unit facilitates the slimness of a display apparatus as compared with a direct-type backlight unit in that light sources are disposed on the edge of a light guide plate, and thus it is used more frequently.

### SUMMARY

Exemplary embodiments overcome the above disadvantages and other disadvantages not described above. Also, exemplary embodiments are not required to overcome the disadvantages described above, and an exemplary embodiment may not overcome any of the problems described above.

According to the present invention there is provided an apparatus and method as set forth in the appended claims. Other features of the invention will be apparent from the dependent claims, and the description which follows.

Accordingly, it is an aspect of one or more exemplary embodiments to provide a display apparatus.

The foregoing and/or other aspects of the exemplary embodiments can be achieved by providing a display apparatus including: an image receiver which receives an image signal; an image processor which processes an image signal received by the image receiver; a display panel which displays an image signal processed by the image processor into an image; a plurality of light guide plates which provide light to divided display regions of the display panel, respectively; and a plurality of light sources sequentially disposed along a lateral surface of each of the light guide plates and which provide light to the lateral surface of each of the plurality of light guide plates, a row of at least part of the plurality of light sources corresponding to the lateral surface of one of the plurality of light guide plates being different from a row of at least part of a remaining portion of the plurality of light sources corresponding to the lateral surface of the one light guide plate.

The plurality of light sources corresponding to the lateral surface of the one light guide plate may include a first light source group of a plurality of light sources disposed in a first row along the lateral surface of the one light guide plate and a second light source group of a plurality of light sources disposed in a second row along the lateral surface of the one light guide plate separately from the first row of the first light source group.

The plurality of light sources in the first light source group and the plurality of light sources in the second light source group may be alternately disposed along the lateral surface of the one light guide plate.

The lateral surface of the one light guide plate may have an uneven shape corresponding to a position of the plurality of light sources corresponding to the lateral surface of the one light guide plate.

The light guide plate may include a plurality of sunken portions formed on the lateral surface of the one light guide plate and on which the plurality of light sources in the first light source group are disposed and a plurality of protruding portions formed on the lateral surface of the one light guide plate and on which the plurality of light sources in the second light source group are disposed, and the plurality of sunken portions and the plurality of protruding portions being alternately formed with each other on the lateral surface of the one light guide plate. That is, the sunken portions each including a first light source group and the protruding portions each including a second light source group may alternate with each other along the lateral surface of the light guide plate.

The display apparatus may include a module board disposed under the one light guide plate along the lateral surface of the one light guide plate and on which the plurality of light sources of the first light source group and the plurality of light sources of the second light source group are mounted.

Each of the plurality of light sources corresponding to the lateral surface of the one light guide plate may include a light emitting diode.

Another aspect of one or more exemplary embodiments may be achieved by providing a backlight unit which provides light to a display panel including: a plurality of light guide plates which provide light to divided display regions of the display panel, respectively; and a plurality of light sources sequentially disposed along a lateral surface of each of the plurality of light guide plates and which provide light to the lateral surface of each of the plurality of light guide plates, a row of at least part of the plurality of light sources corresponding to the lateral surface of one of the light guide plates being different from a row of at least part of a remaining portion of the plurality of light sources corresponding to the lateral surface of the one light guide plate.

The plurality of light sources corresponding to the lateral surface of the one light guide plate may include a first light source group of a plurality of light sources disposed in a first row along the lateral surface of the one light guide plate and a second light source group of a plurality of light sources disposed in a second row along the lateral surface of the one light guide plate separately from the first row of the first light source group.

The plurality of light sources in the first light source group and the plurality of light sources in the second light source group may be alternately disposed along the lateral surface of the one light guide plate.

The lateral surface of the one light guide plate may have an uneven shape corresponding to a position of the plurality of light sources corresponding to the lateral surface of the one light guide plate.

The light guide plate may include a plurality of sunken portions formed on the lateral surface of the one light guide plate and on which the plurality of light sources of the first light source group are disposed and a plurality of protruding portions formed on the lateral surface of the one light guide plate and on which the plurality of light sources of the second light source group are disposed, and the plurality of sunken portions and the plurality of protruding portions being alternately formed with each other on the lateral surface of the one light guide plate. That is, the sunken portions each including a first light source group and the protruding portions each including a second light source group may alternate with each other along the lateral surface of the light guide plate.

The backlight unit may include a module board disposed under the one light guide plate along the lateral surface of the one light guide plate and on which the plurality of light sources of the first light source group and the plurality of light sources of the second light source group are mounted.

Each of the plurality of light sources corresponding to the lateral surface of the one light guide plate may include a light emitting diode.

### BRIEF DESCRIPTION OF THE DRAWINGS

The above and/or other aspects will become apparent and more readily appreciated from the following description of the exemplary embodiments, taken in conjunction with the accompanying drawings, in which:

FIG. 1 is an exploded perspective view of a display apparatus according to an exemplary embodiment;

FIG. 2 is a perspective view of a main part of a light guide plate and a light source module in the display apparatus of FIG. 1;

FIG. 3 is a plane view of the main part of the light guide plate and the light source module of FIG. 2; and

FIG. 4 is a block diagram of the display apparatus according to another exemplary embodiment.

### DETAILED DESCRIPTION OF EXEMPLARY EMBODIMENTS

Below, exemplary embodiments will be described in detail with reference to accompanying drawings so as to be easily realized by a person having ordinary skill in the art. The exemplary embodiments may be embodied in various forms without being limited to the exemplary embodiments set forth herein. Descriptions of well-known parts are omitted for clarity, and like reference numerals refer to like elements throughout. Expressions such as "at least one of" when preceding a list of elements, modify the entire list of elements and do not modify the individual elements of the list.

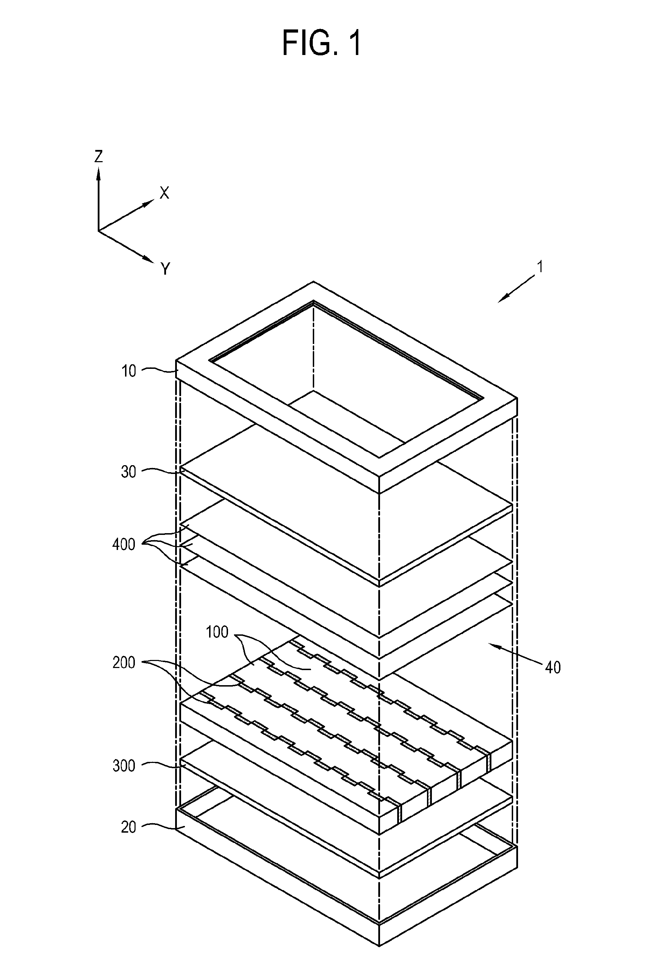

FIG. 1 is a schematic exploded perspective view of a display apparatus 1 according to an exemplary embodiment.

As shown in FIG. 1, the display apparatus 1 includes covers 10 and 20 forming an accommodation space, a display panel 30 accommodated in the accommodation space by the covers 10 and 20 and on which an image is displayed, and a backlight unit 40 accommodated in the accommodation space and providing light to the display panel 30 to display an image on the display panel 30.

Directions in FIG. 1 are defined. Basically, X, Y, and Z directions indicate the width, length, and height directions, respectively. The display panel 30 is disposed on the XY-plane, and the backlight unit 30 and the display panel 30 are layered in the Z direction. The following description of the drawing including FIG. 1 and exemplary embodiments will be made on the basis of the foregoing definition of the directions. Here, the opposite X, Y, and Z directions are expressed as -X, -Y, and -Z directions, respectively, and the XY-plane means a plane defined by the X-axis and the Y-axis.

The covers 10 and 20 form the outward appearance of the display apparatus 1 and accommodate the display panel 30 and the backlight unit 40. The covers 10 and 20 include an upper cover 10 and a lower cover 20 which cover the upper side of the display panel 30 and the lower side of the backlight unit 40, respectively. The upper cover 10 and the lower cover 20 form the accommodation space together, and the display panel 30 and the backlight unit 40 are accommodated in the accommodation space. The upper cover 10 is formed with an opening to expose a display region of the display panel 30.

In the present exemplary embodiment, the display panel 30 is realized by a liquid crystal panel. The display panel 30 is formed of two substrates (not shown) and a liquid crystal layer (not shown) interposed therebetween, and displays images by adjusting the alignment of the liquid crystal layer (not shown) via the application of driving signals. The display panel 30 does not emit light by itself and is provided with light from the backlight unit 40 to display images on the display region. Here, the display region is an area of the display panel 30 which is parallel with the XY-plane and on which images are displayed.

The display panel 30 includes a driving circuit board (not shown) and when a driving signal is applied from the driving circuit board, liquid crystals (not shown) in the display panel 30 rotate at a predetermined angle. Accordingly, light transmission characteristics vary in each cell (not shown) forming the display region of the display panel 30, so that images can be displayed in the display region.

The backlight unit 40 is disposed behind the display panel 30 to provide light to the display panel 30. The backlight unit 40 includes a plurality of light guide plates 100 allowing light to exit to the display region of the display panel 30, a plurality of light source modules 200 generating light to enter the plurality of light guide plates 100, a reflective sheet 300 disposed behind the light guide plates 100 and reflecting light to the display panel 30, and optical sheets 400 adjusting characteristics of light which exit from the light guide plates 300.

Each of the light guide plates 100 is a plastic lens realized by acrylic injection molding and transmits light from the light source modules 200 uniformly to the entire display region of the display panel 30. In the present exemplary embodiment, the light guide plates 100 have a rectangular shape extending in the Y direction and are arrayed in the X direction, but their number, shape, extending direction, and arrangement do not limit the scope of the exemplary embodiments.

The light guide plates 100 have a light transmission pattern on a lower side facing the reflective sheet 300, thereby improving the uniformity of light exiting from the light guide plates 100 and adjusting the amount of exiting light. That is, the amount of light exiting from each of the light guide plates 100 may be different depending on how the light transmission pattern is formed.

The light source modules 200 generate light to provide to the display panel 30 and are disposed on a lateral side (i.e., a length side) of each light guide plate 100 so that generated light enters each light guide plate 100. Namely, the light source modules 200 extend in the Y direction the same as the light guide plates 100, and the light guide plates 100 and the light source modules 200 are alternately disposed (i.e., arrayed) in the X direction.

Light generated from the light source modules 200 is radiated to the light guide plates 100 in a direction parallel with the XY-plane, and then exits from the light guide plates 100 in the Z direction to enter the display panel 30. Accordingly, the display panel 30 forms images in the display region parallel with the XY-plane.

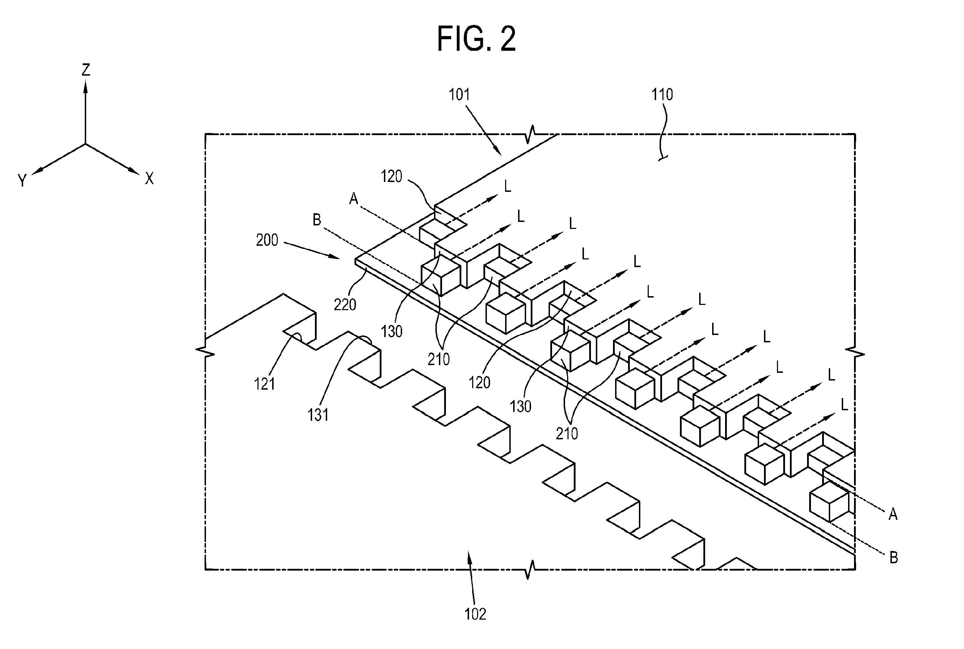

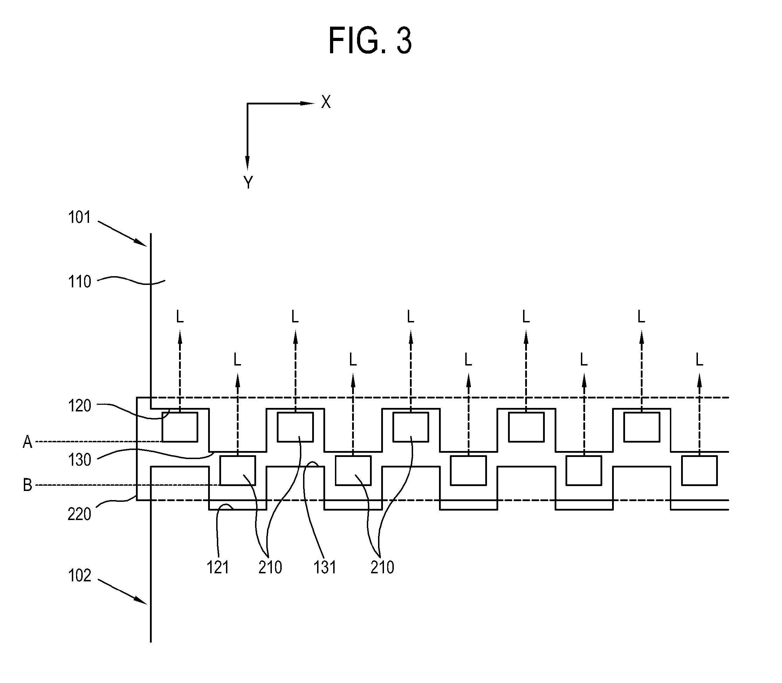

Hereinafter, the configuration of a light guide plate 101 and a light source module 200 will be explained with reference to FIGS. 2 and 3. FIG. 2 is a perspective view of a main part of the light guide plate 101 and the light source module 200; and FIG. 3 is a plane view of the main part of the light guide plate 101 and the light source module 200 of FIG. 2, shown in the -Z direction.

FIGS. 2 and 3 illustrate a first light guide plate 101 among the plurality of the light guide plates 100 disposed in the Y direction and a part of the light source module 200 in the -X direction providing light (L) to the first light guide plate 100. Here, it should be noted that in FIG. 2 the first light guide plate 101 and a neighboring second light guide plate 102 are seen more spaced to show the light source module 200 more clearly. Further, other light guide plates 100 and corresponding light source modules 200 can be applied in the following exemplary embodiment, and thus their description is omitted.

The first light guide plate 101 has a light emitting surface 110 formed on an upper side to the Z direction and through which light (L) radiated from the light source module 200 exits. Further, the first light guide plate 101 includes lateral surfaces 120 and 130 perpendicular to the light emitting surface 110 and extending in the X direction, to which light (L) from the light source module 200 is incident.

The light source module 200 includes a plurality of light sources 210 sequentially disposed in the X direction along the lateral surfaces 120 and 130 of the first light guide plate 101 and a module board 220 on which the light sources 210 are mounted.

In the present exemplary embodiment, the light sources 210 are realized by a light emitting diode (LED) which receives driving power and an on and off control signal from the module board 220. The light sources 210 can control a light emitting direction depending on a mounting type on the module board 220. Thus, in the present exemplary embodiment, the light sources 210 are mounted on the module board 220 so that a light irradiation direction is directed toward the lateral surface 120 and 130 of the first light guide plate 101, i.e., the - Y direction.

The light sources 210 mounted in one module board 220 include blue, green, and red LEDs, and blue, green and red light from the respective LEDs are mixed into white light with excellent color reproducibility. However, this is only an illustrative example, and the light sources 210 may include a white LED which generates white light.

If the light sources 210 in the single module board 220 are disposed in a line, a horizontal bright line is intense along the arrangement of the light sources 210 in the display region of the display panel 30. This increases variations in brightness distribution in the overall display region, thereby deteriorating image quality.

Thus, in the present exemplary embodiment, the plurality of light sources 210 in the light source module 200 are divided into a first light source group disposed in a line along the lateral surface 120 of the light guide plate 101 and a second light source group disposed separately from the first group in a line along the lateral surface 130 of the light guide plate 101. That is, a line formed of at least part of a plurality of light sources 210 corresponding to the lateral surface 120 of the first light guide plate 101 is different from a line formed from at least part of the remaining portion of the plurality of light sources 210 (e.g., those corresponding to the lateral surface 130). In other words, lines of the plurality of light sources 210 in the single light source module 200 are arranged not in a single row or a straight line but in different rows in an alternating sequence.

Here, the light source module 200 is not limited to a configuration with two light source groups, but may include three or more groups depending on a design.

The alternate arrangement of the light sources 210 in the single light source module 200 prevents a horizontal bright line from being as intense in the display region and decreases variations in brightness distribution in the display region, thereby securing image quality.

In the present exemplary embodiment, the light sources 210 in the light source module 200 are arranged along either line of lines A and B which are parallel with the X direction and are separated from each other. That is, the light source module 200 includes the first light source group of a plurality of light sources 210 disposed in a row along line A and the second light source group of a plurality of light sources 210 disposed in a row along line B.

The relative arrangement order of the respective light sources 210 in the first light source group and the second light source group are not limited. For example, the light sources in each group are alternately disposed one by one along the lateral surface 120 and 130 of the first light guide plate 101 as in the present exemplary embodiment, or in plural numbers.

The module board 220 is disposed under the first light guide plate 101 and has a Y-direction width which is at least wider than the space between lines A and B. Accordingly, the first and second light source groups of the light sources 210 are mounted on the module board 220. The module board 220 receives system power of the display apparatus 1 to selectively turn on and off each of the light sources 210.

Meanwhile, the first light guide plate 101 may have various shapes corresponding to the arrangement of the light sources 210. If the lateral surfaces 120 and 130 of the first light guide plate 101 extend in a straight line, the spacing between the light sources 210 in the second light source group arranged in line B and the first light guide plate 101 widens by a predetermine value or more. Then, light (L) generated from the light sources 210 in the second light source group may not enter the first light guide plate 101, i.e., light leakage may occur.

Namely, since the lateral surfaces 120 and 130 of the first light guide plate 101 are to be disposed adjacent to the light sources 210 so that light generated from the light sources 210 enters, in the present exemplary embodiment, a surface formed by the lateral surfaces 120 and 130 of the first light guide plate 101 has an uneven shape in a direction towards the light sources 210 so as to correspond to the position of each light source. For example, the shape of the surface formed by the lateral surfaces 120 and 130 corresponds to the position of the groups of the first and second light source groups. However, this is only an illustrative example, and the shape of the lateral surface 120 and 130 of the first light guide plate may be designed in various ways depending on the arrangement of the light sources 210.

Specifically, the first light guide plate 101 is formed with a lateral surface having a plurality of sunken portions 120 and protruding portions 130 corresponding to lateral surfaces 120 and 130. The protruding portions 130 are formed between the sunken portions 120, and vice versa, and thus the first light guide plate 101 is provided with the sunken portions 120 and the protruding portions 130 disposed alternately. The light sources 210 of the first light source group are disposed corresponding to the sunken portions 120, and the light sources 210 of the second light source group are disposed corresponding to the protruding portions 130.

In order to prevent light (L) from the light sources 210 from leaking and not entering the first light guide plate 101, the first light guide plate 101 has a shape in which the lateral surfaces 120 and 130 are adjacent to the light sources 210.

In the present exemplary embodiment, one light source 210 corresponds to each of the sunken portions 120 and the protruding portions 130, but this is only an illustrative example. Two or more light sources 210 may be disposed to each of the sunken portions 120 and the protruding portions 130.

The sunken portions 120 and the protruding portions 130 are named with reference to their relative shapes for convenience, but the names do not limit the scope of the present invention. Further, although the lateral surfaces 120 and 130 of the first light guide plate 101 form two steps which include the sunken portions 120 and the protruding portions 130, depending on a design, a plurality of light sources may form three light source groups, and accordingly the first light guide plate 101 may have three or more steps of varying degree of "protrusion".

Meanwhile, a lateral surface of the second light guide plate 102 facing the lateral surface, which includes lateral surfaces 120 and 130, of the first light guide plate 101 may be formed in a straight line in the X direction. In this case, however, the spacing between the first light guide plate 101 and the second light guide plate 102 widens to a predetermined distance or more due to the light sources 210 of the second light source group, and a dark portion may be formed in the display region corresponding to an area between the first light guide plate 101 and the second light guide plate 102.

Therefore, the second light guide plate 102 is formed with protruding portions 131 and sunken portions 121 corresponding to the sunken portions 120 and the protruding portions 130, respectively, in an interlocking relationship. The protruding portions 131 of the second light guide plate 102 are disposed corresponding to the sunken portions 120 of the first light guide plate 101, and the sunken portions 121 of the second light guide plate 102 are disposed corresponding to the protruding portions 130 of the first light guide plate 101, thereby preventing the distance between the first light guide plate 101 and the second light guide plate 102 from widening to a predetermined value or more.

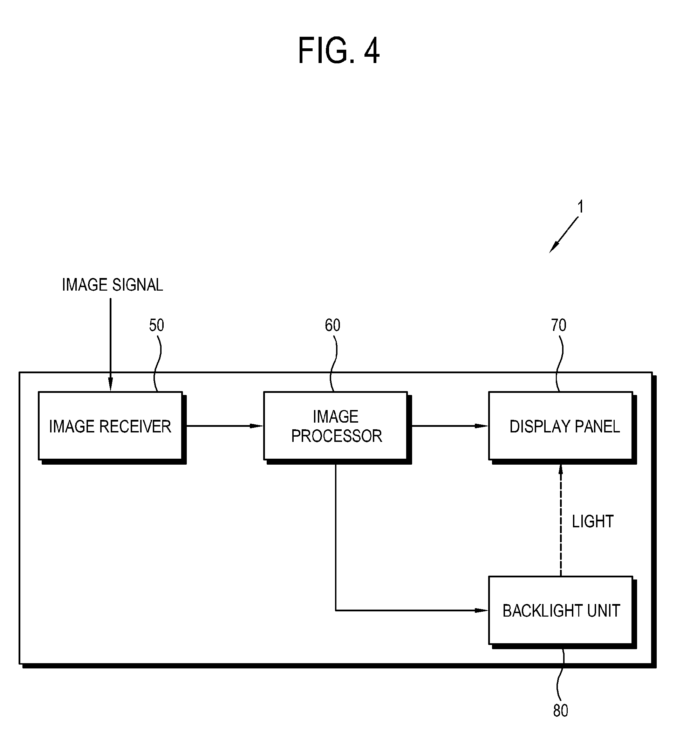

Meanwhile, the foregoing exemplary embodiment is applicable to various display apparatus 1. Hereinafter, in the case of a display apparatus 1 realized by a TV, an exemplary embodiment using the foregoing embodiment is explained with reference to FIG. 4.

FIG. 4 is a block diagram of a display apparatus 1 according to an exemplary embodiment. In FIG. 4, a solid line indicates transmission of an image or control signal, and a dotted line indicates transmission of light.

As shown in FIG. 4, the display apparatus 1 according to the exemplary embodiment includes an image receiver 50 which receives an image signal, an image processor 60 which processes an image signal received by the image receiver 50, a display panel 70 which displays an image signal processed by the image processor 60 into an image, and a backlight unit 80 which provides light so that an image is displayed on the display panel 70.

The image receiver 50 may have various standards as follows. For example, when the display apparatus 1 is realized by a TV, the image receiver 50 receives a radio frequency (RF) signal transmitted from a broadcasting station (not shown) by a wireless standard or image signals in composite video, component video, super video, Syndicat des Constructeurs d'Appareils Radiorécepteurs et Téléviseurs (SCART), and high definition multimedia interface (HDMI) standards. Alternatively, when the display apparatus 1 is a computer monitor, the image receiver 50 may be a D-SUB to transmit RGB signals according to a Video Graphics Array (VGA) format or receive image signals in digital video interactive (DVI) and HDMI standards.

The image processor 60 carries out various preset processes for image processing on image signals transmitted from the image receiver 50. For example, the image processor 60 may conduct, for example, decoding and encoding corresponding to various image formats, de-interlacing, frame refresh rate conversion, scaling, noise reduction to improve image quality, and detail enhancement.

The image processor 60 is provided as a separate component to independently conduct each process or an integrated component which is multi-functional.

The display panel 70 and the backlight unit 80 are substantially the same in configuration as those of the foregoing exemplary embodiments, and their description is omitted.

Although a few exemplary embodiments have been shown and described, it will be appreciated by those skilled in the art the description of the exemplary embodiments are intended to be illustrative, and not to limit the scope of the claims, and many alternatives, modifications, and variations will be apparent to those skilled in the art.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus comprising:
an image which receives receiving an image signal;
an image processor which processes an image signal received by the image receiver;
a display panel which displays an image signal processed by the image processor into an image;
a plurality of light guide plates which provide light to divided display regions of the display panel, respectively; and
a plurality of light sources sequentially disposed along a lateral surface of each of the plurality of light guide plates and which provide light to the lateral surface of each of the light guide plates,
a row of at least part of the plurality of light sources corresponding to the lateral surface of one of the plurality of light guide plates being different from a row of at least part of a remaining portion of the plurality of light sources corresponding to the lateral surface of the one light guide plate.

2. The display apparatus according to claim 1, wherein the plurality of light sources corresponding to the lateral surface of the one light guide plate comprise a first light source group of a plurality of light sources disposed in a first row along the lateral surface of the one light guide plate and a second light source group of a plurality of light sources disposed in a second row along the lateral surface of the one light guide plate separately from the first row of the first light source group.

3. The display apparatus according to claim 2, wherein the light sources of the plurality of light sources of the first light source group and the light sources of the plurality of light sources of the second light source group are alternately disposed along the lateral surface of the one light guide plate.

4. The display apparatus according to claim 2, wherein the lateral surface of the one light guide plate has an uneven shape corresponding to a position of the plurality of light sources corresponding to the lateral surface of the one light guide plate.

5. The display apparatus according to claim 4, wherein the lateral surface of the one light guide plate comprises a plurality of sunken portions formed on the lateral surface of the one light guide plate and on which the plurality of light sources of the first light source group are disposed and a plurality of protruding portions formed on the lateral surface of the one light guide plate and on which the plurality of light sources of the second light source group are disposed, and
the plurality of sunken portions and the plurality of protruding portions being alternately formed with each other on the lateral surface of the one light guide plate.

6. The display apparatus according to claim 2, further comprising a module board disposed under the one light guide plate along the lateral surface of the one light guide plate and on which the plurality of light sources of the first light source group and the plurality of light sources of the second light source group are mounted.

7. The display apparatus according to any preceding claim, wherein each of the plurality of light sources corresponding to the lateral surface of the one light guide plate comprise a light emitting diode.

8. A backlight unit providing light to a display panel comprising:
a plurality of light guide plates which provide light to divided display regions of the display panel, respectively; and
a plurality of light sources sequentially disposed along a lateral surface of each of the plurality of the light guide plates and which provide light to the lateral surface of each of the plurality of the light guide plates,
a row of at least part of the plurality of light sources corresponding to the lateral surface of one of the light guide plates being different from a row of at least part of a remaining portion of the plurality of light sources corresponding to the lateral surface of the one light guide plate.

9. The backlight unit according to claim 8, wherein the plurality of light sources corresponding to the lateral surface of the one light guide plate comprise a first light source group of a plurality of light sources disposed in a first row along the lateral surface of the one light guide plate and a second light source group of a plurality of light sources disposed in a second row along the lateral surface of the one light guide plate separately from the first row of the first light source group.

10. The backlight unit according to claim 9, wherein the light sources of the plurality of light sources of the first light source group and the light sources of the plurality of light sources of the second light source group are alternately disposed along the lateral surface of the one light guide plate.

11. The backlight unit according to claim 9, wherein the lateral surface of the one light guide plate has an uneven shape corresponding to a position of the plurality of light sources corresponding to the lateral surface of the one light guide plate.

12. The backlight unit according to claim 11, wherein the one light guide plate comprises a plurality of sunken portions formed on the lateral surface of the one light guide plate and on which the plurality of light sources of the first light source group are disposed and a plurality of protruding portions formed on the lateral surface of the one light guide plate and on which the plurality of light sources of the second light source group are disposed, and
the plurality of sunken portions and the plurality of protruding portions being alternately formed with each other on the lateral surface of the one light guide plate.

13. The backlight unit according to any one of claims 9 to 12, further comprising a module board disposed under the one light guide plate along the lateral surface of the one light guide plate and on which the plurality of light sources of the first light source group and the plurality of light sources of the second light source group are mounted.

14. The backlight unit according to any one of claims 8 to 13, wherein each of the plurality of light sources corresponding to the lateral surface of the one light guide plate comprise a light emitting diode.
